# EUROPEAN PATENT SPECIFICATION

(11) **EP 3 534 703 B1**
(45) Date of publication and mention of the grant of the patent: **25.08.2021**
(21) Application number: 17817103.9
(22) Date of filing: 02.11.2017
(51) Int. Cl.: A01M 1/04, A01M 1/22

(54) **LAMP FOR ELIMINATING INSECTS**
LAMPE ZUR BESEITIGUNG VON INSEKTEN
LAMPE POUR ÉLIMINER LES INSECTES

(30) Priority: 02.11.2016 IT 201600110251 U
(43) Date of publication of application: 11.09.2019
(73) Proprietor: Tecnimed S.r.l., 21040 Vedano Olona (VA) (IT)
(72) Inventor: BELLIFEMINE, Francesco, 21100 Varese (IT)
(74) Representative: PGA S.p.A.
(86) International application number: PCT/IB2017/056827
(87) International publication number: WO 2018/083625

(56) References cited:
- EP-A2- 1 138 199
- CN-A- 105 532 610
- CN-U- 204 132 213
- CN-U- 205 547 079
- US-A- 4 490 937
- US-A1- 2007 175 085

## Description

### FIELD OF THE INVENTION

The object of the present invention is a lamp particularly an outdoor lamp for eliminating insects, particularly for gardens and/or porches or for any environments outside buildings. In other words, the present invention finds an application both in the field for controlling pests and in the outdoor lighting field.

### STATE OF THE ART

As it is known, the presence of insects, particularly of mosquitoes, is rather annoying for anybody both in a house or in a garden. Structures as flyscreens on the windows protect an internal environment from the presence of these irritating insects, however in a garden it is necessary to find alternative solutions in order to eliminate or at least keep away the mosquitoes from areas which are more frequently occupied by humans. The presence of standing water and light undoubtedly contributes to attract mosquitoes. In addition to natural methods using, for example, anti-mosquito plants, both insect capturing devices and lamps were suitably devised for solving this problem. Some of this type of lamps can be find at garden suppliers. A first type of anti-mosquito lamp has the shape of a standard outdoor lamp, in addition the same is provided with a gluing plate for capturing insects. Actually, the lamp emits a light attracting the insects which are then trapped on the plate. Using this anti-mosquito lamp is very simple, it is sufficient to turn it on and it starts performing its task; obviously the mosquitoes are attracted by the presence of the light and the model with plates provided with glue, conceals on the back a base gluing the insect for capturing it.

The effectiveness of this type of devices is rather limited because the insect can be captured by the gluing plate only if the insect hits the base at a determined speed, for this reason most mosquitoes escape the lamp; moreover, rain and/or dirt remove or anyway diminish the efficacy of the glue so that the capturing effects on animals are exponentially reduced.

In addition to this type of known lamps, there are the electric insecticides. These apparatuses use a combination of light and chemical stimuli for attracting mosquitoes in proximity of an electrified grid which electrocutes the insects just by a slight contact, or of a fan which suctions the mosquitoes for trapping and killing them in a short time by dehydrating them.

For outdoors, due to the problems which are caused by the rain to the electrified systems, generally CO2 generating systems are used which attract mosquitoes for trapping them by suctioning the same. On the contrary, the electrocuting electrical current systems are mainly destined for an internal use for protecting them from the environmental agents. For example, devices killing insects by means of neon and an electrified grid are known. Over the years, this type of apparatuses has benefited from continuous technical updates: the presence of lights of different types (LED, ultraviolet, infrared lights), heat generators, or the addition of photocatalytic plates for emitting small quantities of carbon dioxide (for attracting mosquitoes) have improved the efficiency of these products against the mosquitoes. Despite these apparatuses were designed for being used inside a house, they are also used in outdoor areas protected by the environmental agents such as patios, terraces, gazebos, etcetera.

The beforehand described devices, although are capable of eliminating some of the insects, are not devoid of shortcomings, particularly with reference, for example, to the fact they are not particularly effective in eliminating the attracted insects.

As a result, the known anti-mosquito electric apparatuses probably attract in an area more insects than the ones should normally live in the same area with the result of capturing just a minimum portion.

Moreover, the known devices are devised for being mainly used indoor or anyway in outdoor protected areas for a temporary stay, and therefore they exhibit both a limited temporal and spatial operative ranges.
Document US2007/175085 describes either a rechargeable battery or a solar powered lamp and insect eliminator. The illustrated apparatus includes solar panels, LED bulbs, rechargeable batteries and an insect elimination system. The electrical energy obtained from the light energy is passed through an array of electrical components, which enable the electrical energy to be stored in a battery contained within the lamp housing. When the stored electrical energy is needed, it is caused to flow from the battery through electrical components to transform the electrical energy into the proper voltage and used to power a LED and the insect-elimination system. The housing includes openings which provide an exit for the light from the LED and an entry path for insects. The housing may be hung from a tree or pole or attached to the ground with a stake attached to the underside of the housing. The insects are electrocuted by the electricity generated by the solar panel or rechargeable battery. Additionally, the LED can illuminate dark areas or attract insects to their demise.
CN204132213 (U) is directed to a mosquito-killing lamp used for a garden. The mosquito-killing lamp has an outer shell, a circuit board, a high-voltage power net and a light source body. The light source body is arranged in the hollow interior of the outer shell and electrically connected with the circuit board, and the peripheral face of the light source body is wrapped with the high-voltage power net. The mosquito-killing lamp further comprises a buzzer, a hormone bait plaster and a placement plate. The placement plate is arranged at the bottom inside the outer shell, and is coated with the hormone bait plaster. The buzzer is arranged inside the high-voltage power net and electrically connected with the circuit board. The buzzer, the light source body and the hormone bait plaster are configured for trapping and killing mosquitoes in an integrated mode. Documents US4490937, EP1138199, CN105532610 and CN205547079 U disclose other kind of insect trapping lamps according to the state of the art.

### OBJECT OF THE INVENTION

In this context, the technical task underlying the present invention consists of proposing an outdoor lamp having an anti-insect action which can operate in the presence of bad weather and also for long periods of time, theoretically during the day and night.

A further object of the present invention consists of proposing a lamp, which besides being esthetically pleasant, has a configuration enabling an optimal outdoor lighting during the night having simultaneously the function of eliminating insects by effectively attracting mosquitoes and operating all the night. It is also an object of the invention to provide a lamp which can be easily installed and simple to maintain and which does not require (or can operate also without) the mains power supply.

A further object of the present invention consists of proposing a lamp which improves the capability of capturing insects, particularly mosquitoes.

### SUMMARY

The pointed-out technical task and the specified objects are substantially met by an outdoor lamp for eliminating insects in environments, such as, for example, gardens and/or porches, comprising the technical characteristics disclosed in one or more of the attached claims.

### BRIEF DESCRIPTION OF THE DRAWINGS

Further characteristics and advantages of the present invention will better appear in this illustrative and therefore non-limiting description of some improving but non-excluding embodiments of an outdoor lamp as illustrated in the attached drawings, wherein:
- Figure 1 is a perspective view of an outdoor lamp according to a first embodiment;
- Figure 2 illustrates an upper portion of the lamp comprising the electric supply means, light source and electrified element;

- Figure 3 illustrates a simplified cross-section of the lamp in Figure 1;
- Figure 4 shows a possible variant of the light source and electrified element useable, for example, in the lamp in Figure 1;
- Figure 5 shows a detail of the diffusing body of the lamp in Figure 1;
- Figures 6a-6c show a possible embodiment variant of the lamp in Figure 1;
- Figures 7a-7d show a further possible embodiment variant of the lamp in Figure 1;
- Figure 8 shows a perspective view of an outdoor lighting device with an insect electrocuting system; and
- Figure 9 is a schematic cross-section of the device in Figure 8; and
- Figure 10 is a perspective view of an outdoor lamp according to a further embodiment.

### DETAILED DESCRIPTION

With reference to the attached figures, reference number 1 generally indicates (particularly, but not necessarily) an outdoor lamp for eliminating insects from environments such as for example gardens and/or porches and/or patios and/or backyards and/or gazebos.

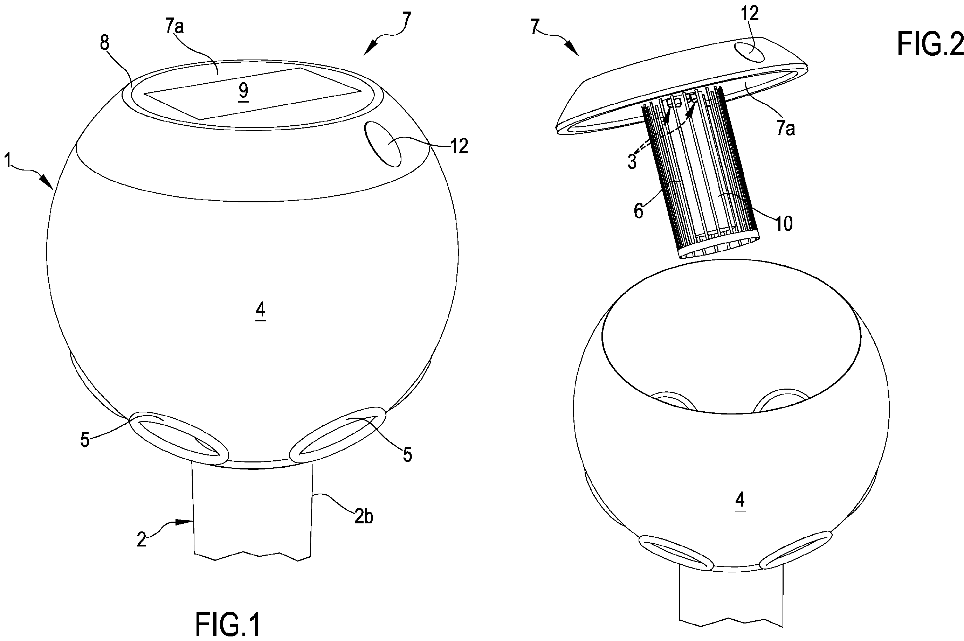

As it is visible in Figures 1 and 3 and 10, the lamp comprises a supporting structure 2 destined to be engaged with or abut on the ground. Naturally, the lamp could, as an alternative, be engaged to a wall of a building or any supporting structures or also to a ceiling or covering wall of any type, such as a porch or under a terrace. In a further assumption, the lamp could be devoid of a supporting structure, since the diffusing body 4 (described in the following) directly abuts on a table, ground or floats in a swimming pool. In other words, the presence and/or specific arrangement of the supporting structure is not a limiting factor of the present invention.

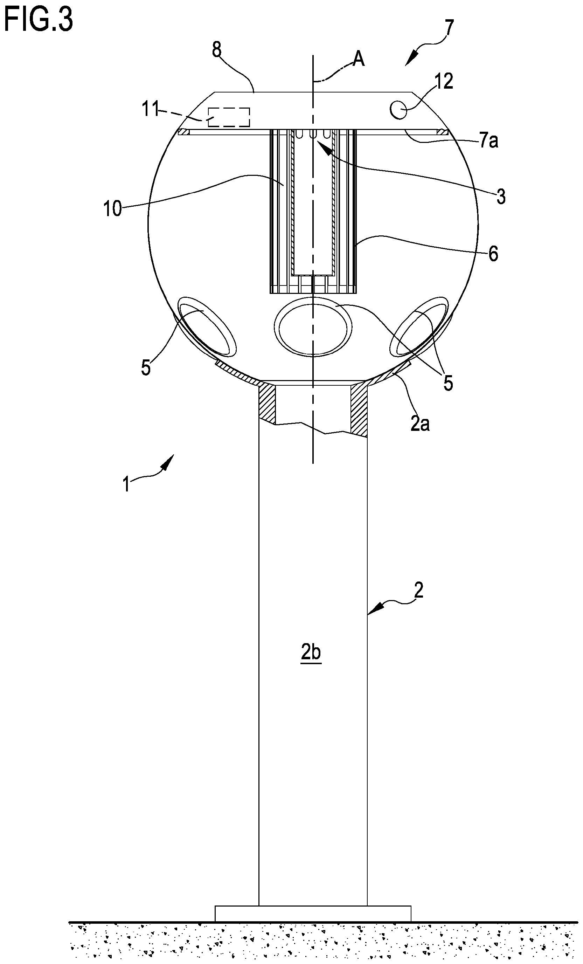

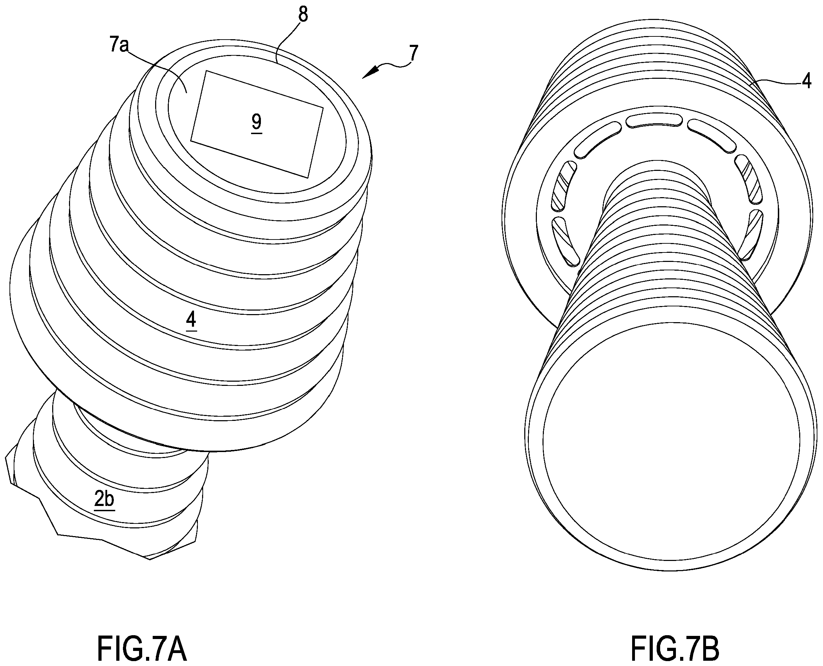

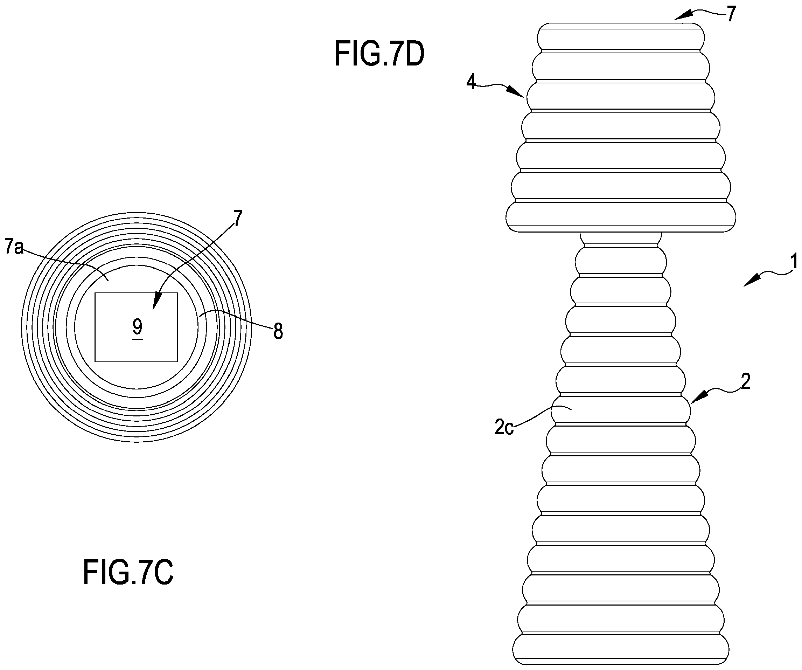

Referring to the example of the attached figures, the supporting structure 2 can consist of at least one post 2b at a first end thereof, fixed to the ground (as schematically shown in Figure 3) or, as an alternative, simply inserted into the ground, or abutting and movable to other areas according to lighting or mosquito killing requirements. As a further alternative, the post could be fixed to a plate or container adapted to contain water, or sand or another heavy material in order make stable it in case of wind. The post 2b supports, at the other end, one or more light diffusing bodies 4. Generally, but in a non-limiting way, the supporting structure 2 comprises a supporting element 2c developing along an extension vertical direction in conditions of use of the lamp itself. An embodiment example alternative to a post, is shown in the embodiment example in Figure 7, wherein the support itself is defined by a shape similar to a series of overlapped concentric rings of gradually decreasing diameters. In any case, the object of the supporting structure 2 is mainly of supporting the whole structure of the lamp, and first of all, the diffusing body 4. Different external shapes of the supporting structure 2 are in the same way possible.

Further, the lamp comprises at least one main light source 3 adapted to emit a light radiation for lighting an environment outside the lamp. The main light source can be generally based on any technology, such as for example can be an incandescence or neon light.

However, advantageously, the same could comprise, in principle, LED lights, and particularly at least blue LED lights, for example at least 4 blue LED lights globally absorbing about 120 mA for ensuring a sufficient illumination and a good capacity of attracting insects. De facto, the LED lights have a reduced consumption enabling the lamp to have a lasting independent operation also without a mains power supply. In an alternative embodiment, the LED lights can further comprise a predetermined number of white LEDs (or of another type). A suitable switch (a slide switch for example) in the electric circuit of the lamp, can enable an user to selectively turn on the blue LEDs or white LEDs (which usually generate more light) based on current needs.

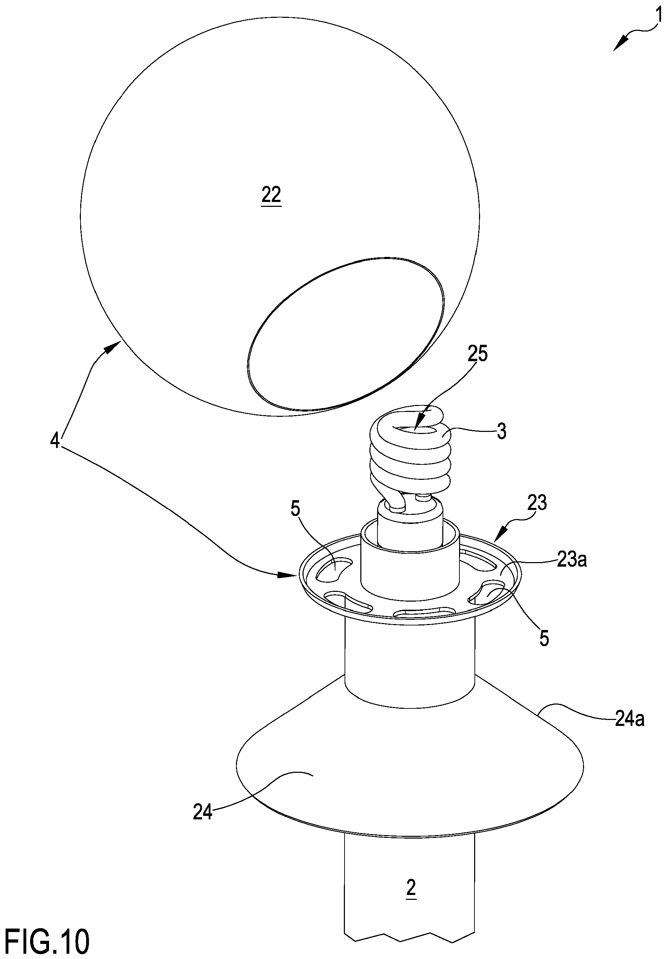

Advantageously, it is observed that lamps with a light of a particular color, can more or less attract determined insects. The insects are attracted more by some types of light, for example the cool light, in the range of 6500K attracts more mosquitoes than an incandescent light of the 3500K type. The dominant color of the emitted light is known as shade of the light. If the dominant color of the light tends to be red in color, the emitted light is said to have a warm shade; if the dominant color of the light tends to be blue in color, the emitted light is said to have a cool shade. Usually, the shade of the light is defined as the color temperature expressed in Kelvin degrees (the lamps and the packages thereof show a printed number immediately followed by the letter K). Small values of the color temperature correspond to warm shades. High values of the color temperature correspond to cool shades. Lighting engineering use the term "color temperature" for quantifying the shade of the light. As the temperature increases, firstly the light gets whiter, then blue, violet and lastly ultraviolet. It is observed that when a light is commonly called warm, actually this light corresponds to a low color temperature and therefore is actually emitted by a cooler body, on the contrary a higher temperature generates a light commonly called as cool and therefore actually emitted by a warmer body. The Applicant has shown by means of suitable studies, that fluorescent light sources at 6500K does not attract only mosquitoes, but also different types of insects, such as wasps, hornets, bed bugs, and sandflies and other insects, on the contrary it looks that LED lights attract mosquitoes and sandflies, but few other insects such as wasps, hornets and bed bugs. In summary, the fluorescent light sources at 6500K attract a lot of mosquitoes and many wasps, hornets, etcetera, the LED lights at 6500K attract many mosquitoes and few large insects, the ones at 3000/3500K attract less mosquitoes and few large insects. Still in other words, lamps with a light source 3 in the range of about 6000/6500K attract mosquitoes, sandflies, bed bugs, wasps, and hornets and small butterflies, while lamps with a warm light source 3 (3000/3500K) attract mainly mosquitoes. Moreover, lamps with a cool light source 3 at 6000/6500K of a fluorescent type, substantially capture more insects than the LEDs of the same color, probably due to the fact that generate more heat. It is further observed that the main light source 3 could be provided with a configuration defining an internal collecting seat 25 accessible from the top in conditions of use of the lamp (see Figure 10); in this case, the main light source 3 exhibits a spiral or column pattern developing around a substantially vertical axis in conditions of use of the lamp. The internal seat 25 is defined inside the spiral/column. Lamps made for being a container of a spiral or column type, attract the insects inside them. The advantage is that it is easily possible to see the effectiveness since the spiral (or columns) are filled by insects and probably the insects die sooner (because they are closely adjacent to the light and heat source) so that they do not have the time for escaping the ball by accidentally finding a small opening when flying as usually the insects do inside the dome (when they do not have the possibility of entering "inside" a standard bulb lamp).

The core part of the lamp is the light radiation diffusing body 4 engaged with the supporting structure 2 and disposed around the main light source 3 for substantially intercepting all the light radiation; the diffusing body 4 is semitransparent and diffuses substantially evenly the light which is diffused along all over the surface thereof. The opaline surface, although intercepts and attenuates the light from the light source (for example LEDs), does not reduce the attracting effect but amplifies it since the opaline surface itself acts as a light guide and therefore the mosquitoes see better a luminous surface having a determined size and a diffused light rather than a source with a higher brightness but smaller or more concentrated. In some embodiments, the diffusing body 4 is made of an opaline plastic material, such as polycarbonate or polymethylmethacrylate; in other embodiments, the diffusing body 4 is made of an opaline diffusing glass. Generally, the diffusing body 4 is defined by a continuous body, having a thickness comprised between 1 mm and 30 mm, particularly exhibiting only a predetermined number of passage openings 5 for enabling the insects to enter, and possibly an upper access seat which couplingly receives from the top the electric supply means 7 described in the following. The diffusing body 4 can be made in one piece or can consist of several portions.

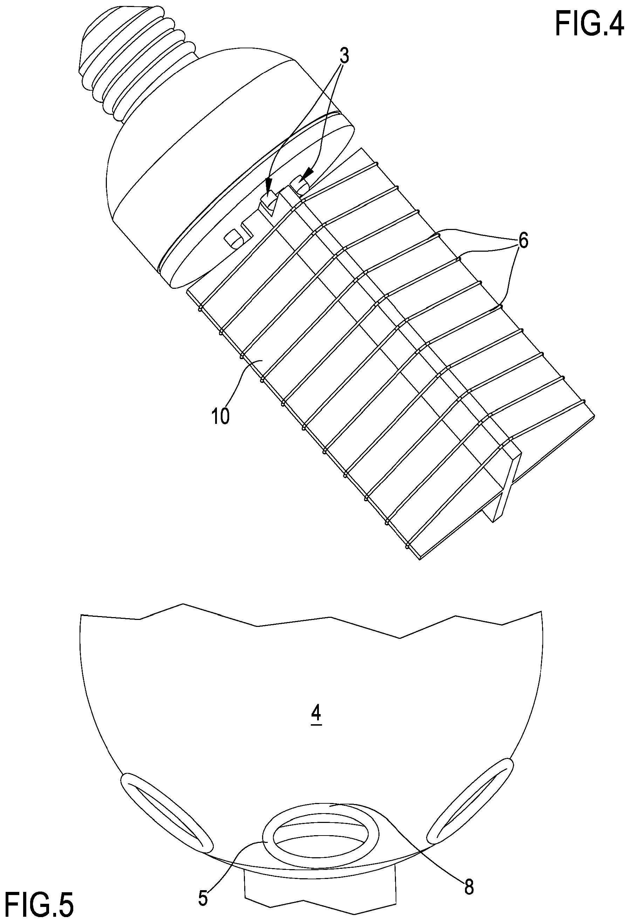

In a first embodiment shown in Figures from 1 to 5, the light radiation diffusing body 4 exhibits a unitary body provided with a spheroidal shape, and a plurality of passage openings 5, for example circular, are disposed at the lower portion of the body itself. As it is visible in Figures 1 and 3, the passage openings 5 are evenly distributed around a vertical symmetry axis A of the diffusing body 4, particularly, the passage openings 5 are at the lower portion of the diffusing body 4. In this way, the interior of the lamp is protected from the rain enabling at the same time the insects to enter towards the lower source. Moreover, the diffusing body 4 comprises at least one seal 8 or, more simply, at least one edge made during the molding step and acting as a drip, placed around each passage opening 5 for reducing a possible inflow of water; see Figure 5. The diffusing body 4 in Figure 1 is an opalescent ball constrained to the supporting structure 2 by abutting on a supporting plate 2a (see Figure 3) to which is coupled by removable elements, such as screws or similar engagement members. As an alternative, as shown in Figure 5, the lower portion of the diffusing body 4 can exhibit a bayonet-type or partial rotation engagement system for ensuring a simple engagement/disengagement for enabling a routine maintenance of the device.

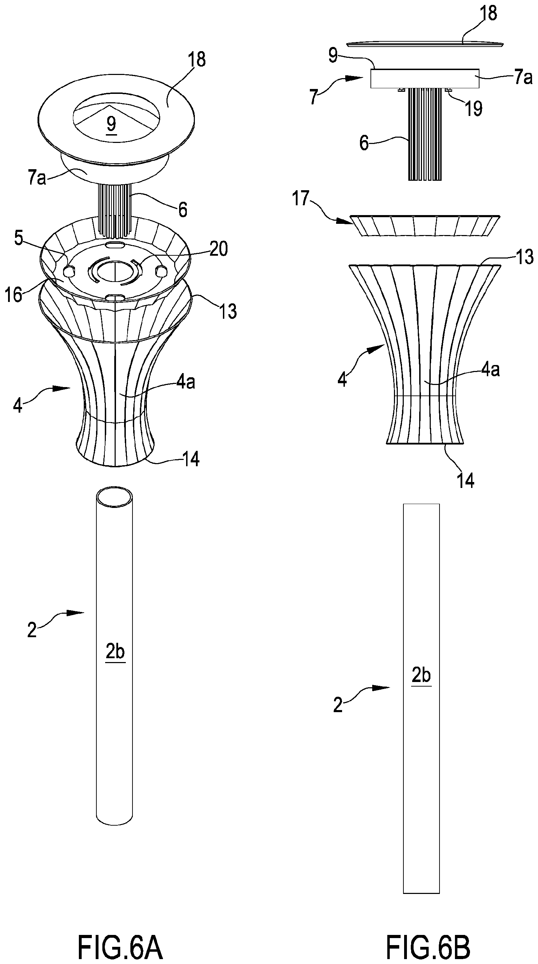

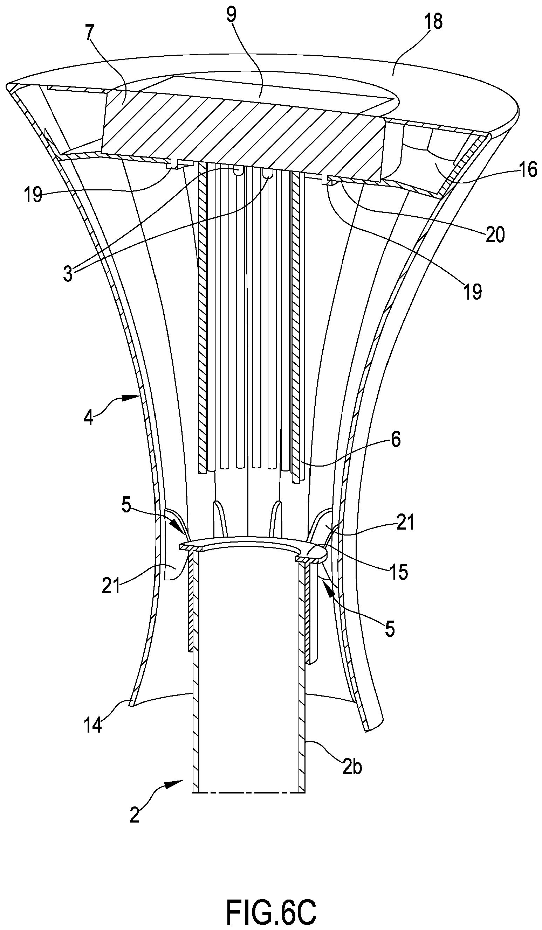

In a different embodiment in Figure 6, the light radiation diffusing body 4 exhibits a hyperbolic hyperboloid lateral wall 4a provided with an upper edge 13 and lower free edge 14 which are substantially circular. In proximity of the lower free edge 14, there is the coupling system for the supporting structure 2 (see Figure 6c); particularly, there is an engagement cap 15 adapted to be coupled to the post 2b by an insertion. This latter is rigidly connected to the diffusing body 4 by means of suitable reinforcing fins 21 which enable the light to better flow downwardly and actually define the openings 5 through which the insects can enter. The plurality of passage openings 5 are evenly distributed around a vertical symmetry axis of the diffusing body itself. By observing Figure 6b, it is observed the presence of a pan 17 destined to be inserted into the diffusing body 4 and to be coupled to the same due to the configuration of the two bodies. The pan 17 defines an upper flat wall 16 which is placed inside the lateral wall in proximity of the upper free edge 13 and exhibits a plurality of passage openings 5, for example elongated and evenly distributed around a vertical symmetry axis of the diffusing body. The lateral wall 4a, upper flat wall 16 and lower flat wall 15 define a trapping volume for the insects, inside which the electrified element described in the following, develops. It is observed in Figures 6a, 6b and 6c that the supporting structure 7a of the electric supply means includes suitable fast hooking elements 19 destined to cooperate with one or more respective shaped seats 20 present on the pan 17, so that the supporting structure 7a can be inserted from the top in the central seat of the pan 17 so that the fast hooking elements 19 enter the enlarged portions of the shaped seats 20; a slight rotation (clockwise in the example of Figure 6a) will enable the fast hooking elements 19 to interfere, when vertically extracted, with the shaped seats (this arrangement is shown in Figure 6c) for ensuring a stable coupling. For preventing the entrance of dirt or leaves, there is also a covering 18 hiding the pan 17, while enabling the light radiation to enter towards the solar panels 9 (through the central hole). The covering 18 can be constrained and be integral with the supporting structure 7a. Then, it is observed that the peculiar arrangement of the lower flat wall 15 receding from the free edge and open only at said openings 5, prevents water from entering from the bottom as could happen with garden sprinklers, for example.

Figures from 7a to 7d show a further embodiment variant of the diffusing body by showing possible lighting products having an intricate appearance. Also in this case, the particular configuration of the lower portion of the lamp prevents an inflow of water from the bottom coming from garden sprinklers.

Figure 10 illustrates a further variant of the diffusing body 4. In this embodiment, the light radiation diffusing body 4 is formed by two half portions and comprises an upper covering 22 and a lower support 23. The passage openings 5 are only placed at the lower support 23 of the diffusing body 4. Specifically, the upper covering 22 and lower support 23 are separated elements coupled in conditions of use of the lamp, and the lower support 23 abuttingly receives and supports the upper covering 22. The lower support 23 in turn is constrained, preferably directly, to the supporting structure 2. One of the reasons for making the diffusing body 4 in two halves is for exploiting a different manufacturing methodology for the two portions in order to reduce the manufacturing costs. De facto, the upper covering 22 can be made by blowing a material of which it consists, which can be a transparent or semitransparent material diffusing the light radiation, for example an opaline plastic material, such as polycarbonate or polymethylmethacrylate. As an alternative, the upper covering 22 can be completely made of an opaline diffusing glass. Blowing enables to shape the upper covering with a substantially dome or spheroidal shape (devoid of openings 5). Actually it is impossible to make the openings in single step by the blowing technology, however even though it were possible to make the same on the dome 23 (as shown in Figure 1), an additional milling step would be still necessary. The passage openings 5, having a curvilinear or circular shape for example, are optionally evenly distributed around a vertical symmetry axis A of the diffusing body 4, but they are positioned only on the lower support.

Advantageously, also the lower support 23 is made of a transparent or semitransparent material and diffuses a light radiation. For example, the lower support 23 is made of an opalescent material. The same can be made by molding it so that the openings 5 are also formed in a single step. The lower support 23 has a substantially flat base 23a on which the plurality of openings 5 are defined, particularly they are orderly disposed around a symmetry axis of the lower support 23 itself (see Figure 10). The lower support 23 could possibly comprise a raised perimetral edge enabling to center and hold the position of the upper covering 22 during the coupling step.

In each of the described embodiments, and particularly referring to the one in Figure 10 (representing it), the lamp can further comprise at least one guard 24 placed below the passage openings 5 for reducing a possible inflow of water from the bottom (caused by irrigation systems and/or rain drops bouncing back on the ground, for example). The guard 24 is constrained to the lower support 23 and/or support structure 2 of the lamp (as shown in Figure 10). The guard 24 is configured in order to enable the water to drain. The guard 24 can exhibit, for example, a flat or convex upper surface 24a (as in Figure 10), and/or exhibit draining holes. For this matter, the guard 24 could be concave for containing possible insects falling dead from the openings 5 in the support (in this case, it would contain the water from rain and sprinklers which is expelled through small holes), or could be flat or convex. The guard 24 can be inserted on a supporting post or around the post with two different modes selected by the user and could be made for being closed around the pole (as a collar) without disassembling or taking apart the support in case the same were previously assembled. Or, can consist in two portions closing, for example, by a hinge and a screw, or by two screws, or by a hook and screw. With reference to the concave shape, the concave guard 24 can be initially mounted facing upwardly for showing how many insects is capable of collecting (and therefore the efficiency thereof) and can be turned upside down for cleaning it.

The interior of the volume defined by the diffusing body 4 possibly receives an electrified element 6 destined to electrocute the insects; the electrified element 6 develops around the main light source 3; particularly, the insects enter the diffusing body and flying towards the main light source interact with the electrified element which ultimately electrocutes them. Since the mosquitoes (or other insects) remain trapped inside the diffusing body, they all shortly end up contacting the electrified element. The electrified element 6 can take different configurations; in a first possible example comprises at least two electric wires (positive and negative) developing about the main light source 3 (see Figure 4). As an alternative or in combination, the electrified element 6 comprises at least one metal grid positioned around the main light source 3; the meshes of the grid will have a size such to not enable an insect, e. g. a mosquito, to pass through. The grid could have vertical elongated meshes as in Figure 2, or horizontal meshes as in Figure 4.

As shown in Figures 2 and 4, the main light source 3 can also comprise an internal light diffuser 10 of a material adapted to guide and diffuse the light, for example an opaline light diffuser. The internal light diffuser 10 directly receives the light from the main light source 3 (for example LEDs) and diffuses it inside the diffusing body 4. The same develops along a main axis, vertical in conditions of use of the lamp, and the electrified element 6 in turn develops around a possible internal light diffuser 10. In the example of Figure 2, the internal light diffuser 10 exhibits a cylindrical shape, for example a tube. The same is removably coupled to a support of the main light source 3. In the example of Figure 4, the same consists of two elongated plates coupled at 90° in order to define a four-face light diffuser with a metal wire of the electrified element 6 spirally wound about, and supported by, the plates themselves. The diffuser could have also a different number of faces and can be printed in one piece. As cited, actually the electrified element 6 develops around an internal light diffuser 10.

The lamp is provided with suitable electric supply means 7 for supplying electric power to said electrified element 6 and to said main light source 3. In the more immediate embodiment, said means consist of a mains power supply suitably transformed for supplying the LEDs and metal grid. In the preferred embodiment, the electric supply means 7, on the contrary, comprise one or more solar panels and a power storage 11 or a small battery; the solar panels transfer the power to the storage during the day and the storage is electrically connected to the electrified element 6 and/or to the main light source 2 for supplying them, particularly during the night. The solar panels 9 are directly coupled to the diffusing body 4 at an upper portion thereof, particularly are removably coupled. Generally the electric supply means 7 comprise a supporting structure 7a supporting both the electrified element 6 and the main light source 3 (see Figure 2, for example).

The supporting structure 7a is removably coupled to the diffusing body 4 at an upper portion thereof; particularly, the diffusing body 4 exhibits an upper access seat which couplingly receives the supporting structure 7a by inserting it from the top; optionally the coupling can be of a snap type, bayonet or threaded type in order to ensure to easily remove the piece, and the maintenance, cleaning or substitution thereof. The supporting structure 7a is also water tightly coupled to the diffusing body 4 so that the rain water cannot flow through the upper access seat of the diffusing body 4. The system can be provided with an outlet, for example of a jack type, for being recharged by the mains in case of rainy days. If the supply is performed exclusively by the mains electric power, the lamp further comprises a light sensor 12 (a twilight switch or photodiode or solar cell), which turns on a power supply for the main light source 3 when the solar light goes under a determined preset threshold. As an alternative or in combination, the lamp can further comprise a programmable timer (or a trimmer), which turns on a power supply for the main light source 3 in determined preset time intervals.

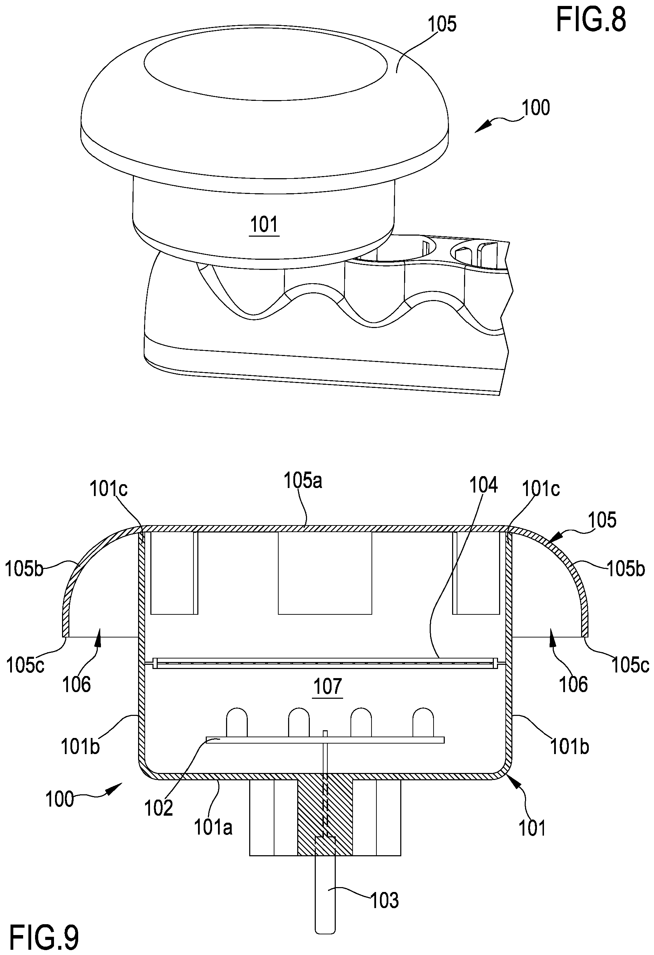

Figures 8 and 9 show a different lighting device 100 also destined to eliminate insects; however, this device was mainly devised to be used inside houses and for being directly connected to an outlet. The lighting device 100 comprises a supporting structure 101 defining a housing chamber 107 inside it for containing a circuit capable of driving and controlling the lights and an electrified element for electrocuting insects as described in the following. The supporting structure 101 exhibits, oppositely to the chamber 107, a plug 103 adapted to be directly inserted into an outlet. The plug 103 is integrally made with the supporting structure 101 and emerges from the bottom wall 101a facing away from the housing chamber 107. Indeed, as it is visible in Figure 8, the device 100 is configured for being inserted in the outlet for emerging from this latter when is used. The housing chamber 107 of the supporting structure 101 exhibits a box shape with a bottom wall 101a and lateral wall 101b emerging from the bottom wall and is delimited by a free edge 101c for defining an access front opening. At least one main light source 102 adapted to emit a light radiation for lighting an environment outside the device, is housed in said chamber 107, directly electrically connected, by previously interposing a suitable circuit board, to the electric supply plug. The main light source 102 comprises LED lights, particularly blue or white LED lights, for example at least 4 blue or white LED lights. The device, when used, serves both as a night orientation light and, as explained in the following, for eliminating insects, such as mosquitoes. As it is visible in Figure 9, the device 100 also comprises an electrified element 104 for electrocuting insects, which is placed inside the housing chamber 107. The main light source 102 is interposed between the electrified element 104 and bottom wall 101a of the supporting structure 101. The electrified element 104 comprises at least one metal grid positioned between an access to the supporting structure 101 and the main light source 102, and the meshes of the grid have a suitable size so that an insect, such as a mosquito, passing through them, inevitably contacts two adjacent meshes of the grid. As it is evident in Figure 9, the device is also provided with a light radiation diffusing body 105 engaged with the supporting structure 101 and disposed substantially to close the housing chamber 107 in order to substantially intercept said light radiation; the diffusing body 105 is semitransparent and diffuses substantially evenly the light which is diffused all over the surface thereof. Moreover, the diffusing body 105 defines, cooperatively with the supporting structure 101, at least one passage opening 106 configured for enabling the insects to enter inside the housing chamber 107. To this end, the diffusing body 105 further comprises removable hooking means for engaging the supporting structure 101. As it is visible in Figures 8 and 9, the diffusing body 105 is coupled to the supporting structure 101 for substantially covering and preventing an access to the front opening of the housing chamber 107 and therefore to prevent a possible direct access to the electrified element 104. The diffusing body exhibits a dome shape defined by an upper wall 105a from which a lateral wall 105b emerges; the dome is open at a free edge 105c of the lateral wall 105b and the passage opening 106 is defined between respective free edges 105c and 101c of the diffusing body 105 and of the supporting structure 101. The diffusing body 105 typically exhibits a thickness comprised between 0.5 mm and 20 mm and is made of an opaline plastic material, such as polycarbonate or polymethylmethacrylate. As an alternative, it can consist of an opaline diffusing glass.

The invention obtains substantial advantages.

The outdoor lamp, according to what was described and illustrated, exhibits a structure such to attract and trap insects attracted inside the diffusing body so that they end up being electrocuted by the electrified grid, so that the trapping efficiency thereof is enhanced.

The presence of a surface of the opalescent diffusing body, provided that the thickness thereof is rather limited and sufficiently transparent, does not reduce the attracting effect on the insects but amplifies it since the opaline surface acts as a light guide and the mosquitoes/insects see better a ball of a determined size and with a diffused light rather than a source with a more intense luminosity, but smaller (for example a LED). Moreover, the extended night operation (which can be also made automatic) enables the device to operate for long periods of time without a human presence, in this way the number of mosquitoes is affected and is gradually decreased as the time goes by. Lastly, the device can be disassembled and can be very easily cleaned. The advantages of the invention are evident also with reference to the cost-effectiveness of the technical solution and to the construction simplicity of the components. Lastly, it is clearly inferred from the present description that exist many possible modifications to the components of the lamp according to the present invention, with reference to the size, configurations and materials for example, which still fully fall into the scope defined by the following claims which also are an integral part of the present description.

## Claims

1. Outdoor lamp (1) for eliminating insects, comprising:
- at least one main light source (3) adapted to emit a light radiation, said main light source (3) being configured for illuminating also an environment outside the lamp,
- a light radiation diffusing body (4) disposed around said main light source (3) in order to substantially intercept said light radiation, said diffusing body (4) being at least partially semitransparent and substantially uniformly diffusing the light which is diffused along all the surface thereof, the diffusing body (4) exhibiting at least one passage opening (5) configured for enabling insects to enter inside the body (4) itself;
- optionally, an electrified element (6) for electrocuting the insects, placed inside said diffusing body (4) and developing around said main light source (3);
- electric supply means (7) for supplying power to said main light source (3) and, optionally, to said electrified element (6),
**characterized in that** the light radiation diffusing body (4) exhibits a spheroidal shape, a predetermined number of passage openings (5) being disposed at a lower portion of the body (4), and wherein the diffusing body (4) comprises an opalescent ball and is configured to be constrained to a supporting structure (2) optionally by a constrain having removable elements such as screws or similar engagement members.

2. Lamp (1) according to the preceding claim, wherein said diffusing body (4) defines a substantial volume closed around the main light source (3) open to the outside only through said predetermined number of passage openings (5), the passage openings (5) occupying less than 25% of the surface of the diffusing body (4), and particularly less than 15% of the surface of the diffusing body (4), still more particularly less than 10% or 5%.

3. Lamp according to anyone of the preceding claims, wherein the light radiation diffusing body (4) comprises an upper covering (22) and a lower support (23), said at least one passage opening (5) being placed at the lower support (23) of the diffusing body (4), the upper covering (22) and lower support (23) being separated elements coupled, in the conditions of use of the lamp, the lower support (23) abuttingly receiving and supporting the upper covering (22), wherein the upper covering (22) is made of a transparent or semitransparent material, diffuses a light radiation and exhibits a substantially dome or spheroidal shape without openings in conditions of use of the lamp, the lower support (23) is made of a transparent or semitransparent material, diffuses a light radiation and exhibits a predetermined number of passage openings (5), for example curvilinear or circular, particularly evenly distributed around a vertical symmetry axis (A) of the diffusing body (4).

4. Lamp according to claim 3, wherein the upper covering (22) is an opalescent ball and is indirectly constrained to a supporting structure (2) by abutting on the lower support (23) in turn constrained, preferably directly, to the supporting structure (2), wherein the lower support (23) has a substantially flat base (23a) on which a plurality of openings (5) are defined, particularly they are orderly disposed around a symmetry axis of the lower support (23), and wherein the diffusing body (4) is completely made of an opaline diffusing glass or an opaline plastic material, such as polycarbonate or polymethylmethacrylate,
particularly the lower support (23) being made of an opalescent plastic material.

5. Lamp according to anyone of the preceding claims from 3 to 4, wherein the upper covering (22) defines an internal volume only accessible through the passage openings (5) of the lower support (23) for substantially trapping an insect entered through the passage opening.

6. Lamp according to anyone of the preceding claims, wherein the diffusing body (4) further comprises at least one seal (8) placed around each passage opening (5) for limiting a possible entrance of water and/or wherein the diffusing body (4) further comprises at least one edge, for example obtained by molding, placed around each passage opening (5) for limiting a possible entrance of water.

7. Lamp according to anyone of the preceding claims, wherein the main light source (3) has a cool light shade with a color temperature greater than 4000K, particularly greater than 6000K, for example equal to 6500K, wherein the main light source (3) is a fluorescent light source and optionally is the only light source of the lamp.

8. Lamp according to anyone of the preceding claims, wherein the main light source (3) has a configuration defining an inner collecting seat (25) accessible from the top in conditions of use of the lamp, particularly the main light source (3) exhibiting a spiral or column pattern and develops around a substantially vertical axis in the conditions of use of the lamp, the inner seat (25) being defined inside the spiral or column.

9. Lamp according to anyone of the preceding claims, further comprising at least one guard (24) located below the passage opening (5) for limiting a possible entrance of water from the bottom, the guard (24) being constrained to the lower support (23) and/or to a support structure (2) of the lamp, wherein the guard (24) is configured for enabling the water to drain, the guard (24) exhibiting, for example, an upper flat or convex surface (24a), and/or exhibiting draining holes.

10. Lamp according to anyone of the preceding claims, further comprising a supporting structure (2) destined to support at least said diffusing body (4), wherein the supporting structure (2) is destined to be engaged with or abut on the ground and/or is destined to be engaged with a wall of a building or structure and/or is destined to be constrained to a ceiling or covering surface in particular the supporting structure (2) comprises at least one post (2b) fixed to the ground, for example to be inserted into the soil, at a first end thereof, and supporting one or more diffusing bodies (4) at the other end, wherein the supporting structure (2) comprises at least one supporting element (2c) fixed to the ground at a first end thereof and supporting one or more diffusing bodies (4) at the other end, said supporting element (2) developing along a vertical extension direction in the conditions of use of the lamp.

11. Lamp according to anyone of the preceding claims, wherein the electric supply means (7) comprise a mains supply and/or one or more solar panels (9) and a power storage (11), the solar panels transferring energy to said storage and said storage being electrically connected to said electrified element (6) and/or to said main light source (3), wherein the solar panel (9) is coupled, particularly removably, to the diffusing body (4) at an upper portion thereof.

12. Lamp according to anyone of the preceding claims, wherein the electric supply means (7) comprise a supporting structure (7a) supporting said electrified element (6) and said main light source (3), wherein the supporting structure (7a) is removable coupled to the diffusing body (4) at an upper portion thereof, particularly the diffusing body (4) exhibiting an upper access seat which couplingly receives by a top insertion the supporting structure (7a) of the electric supply means (7), said coupling being optionally of a snap, bayonet or threaded type wherein the supporting structure (7a) is removable watertightly coupled to the diffusing body (4) so that the rain water cannot flow through the upper access seat of the diffusing body (2).

13. Lamp according to anyone of the preceding claims, wherein the electrified element (6) comprises at least one electric wire developing around the main light source (3), and/or at least one metal grid positioned around the main light source (3), optionally the meshes of the grid being of a size which does enable an insect such as a mosquito to pass through.

14. Lamp according to anyone of the preceding claims, further comprising an inner light diffuser (10) of a material adapted to guide and diffuse the light, for example an opaline light diffuser, said inner light diffuser (10) directly receiving the light from the main light source (3) and diffusing it inside the diffusing body (4), wherein the inner light diffuser (10) develops along a main axis, for example a vertical one in the conditions of use of the lamp, the electrified element (6) developing around said inner light diffuser (10), optionally wherein the inner light diffuser (10) exhibits a cylindrical shape, for example has the shape of a tube.

15. Lamp according to anyone of the preceding claims, further comprising a solar light sensor (12), said sensor activating a power supply for the main light source (3) when the solar light decreases below a determined preset threshold and/or further comprising a programmable timer, said timer activating a power supply for the main light source (3) in determined time intervals.

## Patentansprüche

1. Außenlampe (1) zum Eliminieren von Insekten, umfassend:
- wenigstens eine Hauptlichtquelle (3), welche dazu eingerichtet ist, eine Lichtstrahlung zu emittieren, wobei die Hauptlichtquelle (3) dazu eingerichtet ist, ebenfalls eine Umgebung außerhalb der Lampe zu beleuchten,
- einen Lichtstrahlung-Streukörper (4), welcher um den Hauptlichtkörper (3) herum angeordnet ist, um die Lichtstrahlung im Wesentlichen zu unterbrechen, wobei der Streukörper (4) wenigstens teilweise semi-transparent ist und das Licht, welches entlang der gesamten Fläche davon gestreut wird, im Wesentlichen einheitlich streut, wobei der Streukörper (4) wenigstens eine Durchgangsöffnung (5) aufweist, welche dazu eingerichtet ist, Insekten zu ermöglichen, in das Innere des Körpers (4) selbst zu gelangen;
- optional ein elektrifiziertes Element (6) zum Töten der Insekten durch einen Stromschlag, welches innerhalb des Streukörpers (4) platziert ist und um die Hauptlichtquelle (3) herum verläuft;
- elektrische Versorgungsmittel (7), um die Hauptlichtquelle (3) und optional das elektrifiziertes Element (6) mit Leistung zu versorgen,
**dadurch gekennzeichnet, dass** der Lichtstrahlung-Streukörper (4) eine kugelartige Form aufweist, wobei eine vorbestimmte Anzahl von Durchgangsöffnungen (5) an einem unteren Abschnitt des Körpers (4) angeordnet ist, und wobei der Streukörper (4) eine opaleszente Kugel umfasst und dazu eingerichtet ist, mit einer Halterungsstruktur (2), optional durch eine Zwangsverbindungseinrichtung, welche entfernbare Elemente wie Schrauben oder ähnliche Eingriffselemente aufweist, in Zwangsverbindung gebracht zu sein.

2. Lampe (1) nach dem vorhergehenden Anspruch, wobei der Streukörper (4) ein wesentliches Volumen definiert, welches um die Hauptlichtquelle (3) herum geschlossen und nach außen nur durch die vorbestimmte Anzahl von Durchgangsöffnungen (5) geöffnet ist, wobei die Durchgangsöffnungen (5) weniger als 25 % der Fläche des Streukörpers (4), und insbesondere weniger als 15 % der Fläche des Streukörpers (4), weiter insbesondere weniger als 10% oder 5%, einnehmen.

3. Lampe nach einem der vorhergehenden Ansprüche, wobei der Lichtstrahlung-Streukörper (4) eine obere Abdeckung (22) und eine untere Halterung (23) umfasst, wobei die wenigstens eine Durchgangsöffnung (5) an der unteren Halterung (23) des Streukörpers (4) platziert ist, wobei die obere Abdeckung (22) und die untere Halterung (23) separate, gekoppelte Elemente sind, wobei unter den Einsatzbedingungen der Lampe, die untere Halterung (23) die obere Abdeckung (22) anliegend aufnimmt und haltert, wobei die obere Abdeckung (22), aus einem transparenten oder semi-transparenten Material hergestellt ist, unter Einsatzbedingungen der Lampe, eine Lichtstrahlung streut und eine im wesentlichen kuppelartige oder kugelartige Form ohne Öffnungen aufweist, wobei die untere Halterung (23) aus einem transparenten oder semi-transparenten Material hergestellt ist, eine Lichtstrahlung streut und eine vorbestimmte Anzahl von Durchgangsöffnungen (5), beispielsweise gekrümmt oder kreisförmig, insbesondere gleichmäßig um eine vertikale Symmetrieachse (A) des Streukörpers (4) verteilt, aufweist.

4. Lampe nach Anspruch 3, wobei die obere Abdeckung (22) eine opaleszente Kugel ist und indirekt mit einer Halterungsstruktur (2) in Zwangsverbindung gebracht ist, indem sie an der unteren Halterung (23) anliegt, welche wiederum, vorzugsweise direkt, mit der Halterungsstruktur (2) in Zwangsverbindung gebracht ist, wobei die untere Halterung (23) eine im Wesentlichen ebene Basis (23a) aufweist, an welcher eine Mehrzahl von Öffnungen (5) definiert sind, insbesondere wobei diese geordnet um eine Symmetrieachse der unteren Halterung (23) angeordnet sind, und wobei der Streukörper (4) vollständig aus einem opalen streuenden Glas oder einem opalen Kunststoffmaterial, beispielsweise Polycarbonart oder Polimethylmethacrylat, hergestellt ist, wobei die untere Halterung (23) insbesondere aus einem opaleszenten Kunststoffmaterial hergestellt ist.

5. Lampe nach einem der vorhergehenden Ansprüche von 3 bis 4, wobei die obere Abdeckung (22) ein inneres Volumen definiert, welches nur durch die Durchgangsöffnungen (5) der unteren Halterung (23) zugänglich ist, um ein durch die Durchgangsöffnung hineingelangtes Insekt im Wesentlichen einzufangen.

6. Lampe nach einem der vorhergehenden Ansprüche, wobei der Streukörper (4) ferner wenigstens eine Dichtung (8) umfasst, welche um jede Durchgangsöffnung (5) herum platziert ist, um ein mögliches Hineingelangen von Wasser zu begrenzen und/oder wobei der Streukörper (4) ferner wenigstens einen Rand, welcher beispielsweise durch Formen erhalten worden ist, platziert um jede Durchgangsöffnung (5) herum umfasst, um ein mögliches Hineingelangen von Wasser zu begrenzen.

7. Lampe nach einem der vorhergehenden Ansprüche, wobei die Hauptlichtquelle (3) einen Farbton kühlen Lichts mit einer Farbtemperatur aufweist, welche größer als 4000 K, insbesondere größer als 6000 K, beispielsweise gleich 6500 K, ist, wobei die Hauptlichtquelle (3) eine fluoreszierende Lichtquelle ist und optional die einzige Lichtquelle der Lampe ist.

8. Lampe nach einem der vorhergehenden Ansprüche, wobei die Hauptlichtquelle (3) eine Konfiguration aufweist, welche einen inneren Sammlungssitz (25) definiert, welcher unter Einsatzbedingungen der Lampe von der Oberseite her zugänglich ist, wobei die Hauptlichtquelle (3) insbesondere ein Spiral- oder Säulenmuster aufweist und, unter Einsatzbedingungen der Lampe, um eine im Wesentlichen vertikale Achse herum verläuft, wobei der innere Sitz (25) innerhalb der Spirale oder Säule definiert ist.

9. Lampe nach einem der vorhergehenden Ansprüche, ferner umfassend wenigstens ein Schutzelement (24), welches unterhalb der Durchgangsöffnung (5) angeordnet ist, um ein mögliches Hineingelangen von Wasser von der Unterseite her zu begrenzen, wobei das Schutzelement (24) mit der unteren Halterung (23) und/oder einer Halterungsstruktur (2) der Lampe in Zwangsverbindung gebracht ist, wobei das Schutzelement (24) dazu eingerichtet ist, dem Wasser zu ermöglichen, abzufließen, wobei das Schutzelement (24) beispielsweise eine obere ebene oder konvexe Fläche (24a) aufweist und/oder Abflusslöcher aufweist.

10. Lampe nach einem der vorhergehenden Ansprüche, ferner umfassend eine Halterungsstruktur (2), welche dazu bestimmt ist, wenigstens den Streukörper (4) zu Haltern, wobei die Halterungsstruktur (2) dazu bestimmt ist, mit dem Untergrund in Eingriff gebracht zu sein oder gegen diesen anzuliegen, und/oder dazu bestimmt ist, mit einer Wand eines Gebäudes oder einer Struktur in Eingriff gebracht zu sein, und/oder dazu bestimmt ist, mit einer Decke oder einer Abdeckfläche in Zwangsverbindung gebracht zu sein, wobei die Halterungsstruktur (2) insbesondere wenigstens einen an dem Untergrund fixierten Pfosten (2b) umfasst, welcher beispielsweise an einem ersten Ende davon in die Erde einzusetzen ist und an dem anderen Ende einen oder mehrere Streukörper (4) haltert, wobei die Halterungsstruktur (2) wenigstens ein Halterungselement (2c) umfasst, welches an einem ersten Ende davon an dem Boden fixiert ist und an dem anderen Ende einen oder mehrere Streukörper (4) haltert, wobei das Halterungselement (2) unter den Einsatzbedingungen der Lampe entlang einer vertikalen Erstreckungsrichtung verläuft.

11. Lampe nach einem der vorhergehenden Ansprüche, wobei die elektrischen Versorgungsmittel (7) einen Netzanschluss und/oder ein oder mehrere Solarpaneele (9) und einen Energiespeicher (11) umfassen, wobei die Solarpaneele Energie zu dem Speicher übertragen und der Speicher mit dem elektrifizierten Element (6) und/oder der Hauptlichtquelle (3) elektrisch verbunden ist, wobei das Solarpanel (9) an einem oberen Abschnitt davon mit dem Streukörper (4), insbesondere lösbar, gekoppelt ist.

12. Lampe nach einem der vorhergehenden Ansprüche, wobei die elektrischen Versorgungsmittel (7) eine Halterungsstruktur (7a) umfassen, welche das elektrifizierte Element (6) und die Hauptlichtquelle (3) haltert, wobei die Halterungsstruktur (7a) an einem oberen Abschnitt davon lösbar mit dem Streukörper (4) gekoppelt ist, wobei insbesondere der Streukörper (4) einen oberen Zugangssitz aufweist, welcher die Halterungsstruktur (7a) der elektrischen Versorgungsmittel (7) durch einen oberen Einsatz koppelnd aufnimmt, wobei die Kopplung optional von einem Schnapp-, Bayonett- oder Gewinde-Typ ist, wobei die Halterungsstruktur (7a) mit dem Streukörper (4) lösbar wasserdicht gekoppelt ist, so dass das Regenwasser nicht durch den oberen Zugriffssitz des Streukörpers (2) hindurchströmen kann.

13. Lampe nach einem der vorhergehenden Ansprüche, wobei das elektrifizierte Element (6) wenigstens einen elektrischen Draht, welcher um die Hauptlichtquelle (3) herum verläuft, und/oder wenigstens ein Metallgitter umfasst, welches um die Hauptlichtquelle (3) herum positioniert ist, wobei die Maschen des Gitters optional von einer Größe sind, welche einem Insekt, beispielsweise einem Moskito, nicht ermöglichen, hindurchzutreten.

14. Lampe nach einem der vorhergehenden Ansprüche, ferner umfassend ein inneres Lichtstreuelement (10) aus einem Material, welches dazu eingerichtet ist, das Licht zu leiten und zu streuen, beispielsweise ein opales Lichtstreuelement, wobei das innere Lichtstreuelement (10) das Licht von der Hauptlichtquelle (3) direkt empfängt und es innerhalb des Streukörpers (4) streut, wobei das innere Lichtstreuelement (10) entlang einer Hauptachse, beispielsweise einer unter den Einsatzbedingungen der Lampe vertikalen, verläuft wobei das elektrifizierte Element (6) um das innere Lichtstreuelement (10) herum verläuft, wobei das innere Lichtstreuelement (10) optional eine zylindrische Form, beispielsweise die Form eines Rohres, aufweist.

15. Lampe nach einem der vorhergehenden Ansprüche, ferner umfassend einen Solarlicht-Sensor (12), wobei der Sensor eine Energieversorgung für die Hauptlichtquelle (3) aktiviert, wenn das Solarlicht unter einen vorbestimmten voreingestellten Schwellenwert abnimmt und/oder ferner umfassend einen programmierbaren Timer, wobei der Timer eine Energieversorgung für die Hauptlichtquelle (3) in vorbestimmten Zeitintervallen aktiviert.

## Revendications

1. Lampe (1) d'extérieur pour l'élimination des insectes, comprenant :
- au moins une source de lumière principale (3) adaptée pour émettre un rayonnement de lumière, ladite source de lumière principale (3) étant conçue pour éclairer également un environnement à l'extérieur de la lampe,
- un corps de diffusion (4) à rayonnement de lumière disposé autour de ladite source de lumière principale (3) afin d'intercepter sensiblement ledit rayonnement de lumière, ledit corps de diffusion (4) étant au moins partiellement semi-transparent et diffusant sensiblement uniformément la lumière qui est diffusée le long de toute la surface de celui-ci, le corps de diffusion (4) faisant preuve d'au moins une ouverture de passage (5) conçue pour permettre aux insectes de pénétrer à l'intérieur du corps (4) lui-même ;
- éventuellement, un élément électrifié (6) pour l'électrocution des insectes, placé à l'intérieur dudit corps de diffusion (4) et se développant autour de ladite source de lumière principale (3) ;
- un moyen d'alimentation électrique (7) pour alimenter de l'énergie à ladite source de lumière principale (3) et, éventuellement, audit élément électrifié (6),
**caractérisée en ce que** le corps de diffusion (4) à rayonnement de lumière fait preuve d'une forme sphéroïde, un nombre prédéterminé d'ouvertures de passage (5) étant disposées au niveau d'une portion inférieure du corps (4), et le corps de diffusion (4) comprenant une boule opalescente et étant conçu pour être contraint à une structure de support (2) éventuellement par une contrainte ayant des éléments mobiles tels que des vis ou des éléments d'engagement semblables.

2. Lampe (1) selon la revendication précédente, ledit corps de diffusion (4) définissant un volume substantiel enfermé autour de la source de lumière principale (3) ouvert à l'extérieur uniquement à travers ledit nombre prédéterminé d'ouvertures de passage (5), les ouvertures de passage (5) occupant moins de 25 % de la surface du corps de diffusion (4), et particulièrement moins de 15 % de la surface du corps de diffusion (4), encore plus particulièrement moins de 10 % ou de 5 %.

3. Lampe selon l'une quelconque des revendications précédentes, le corps de diffusion (4) à rayonnement de lumière comprenant un recouvrement supérieur (22) et un support inférieur (23), ladite au moins une ouverture de passage (5) étant placée au niveau du support inférieur (23) du corps de diffusion (4), le recouvrement supérieur (22) et le support inférieur (23) étant des éléments séparés accouplés, dans les conditions d'utilisation de la lampe, le support inférieur (23) recevant en butée et supportant le recouvrement supérieur (22), le recouvrement supérieur (22) étant constitué d'un matériau transparent ou semi-transparent, diffusant un rayonnement de lumière et faisant preuve d'une forme sensiblement en dôme ou de sphère sans ouvertures dans les conditions d'utilisation de la lampe, le support inférieur (23) étant constitué d'un matériau transparent ou semi-transparent, diffusant un rayonnement de lumière et faisant preuve d'un nombre prédéterminé d'ouvertures de passage (5), par exemple curvilignes ou circulaires, réparties particulièrement uniformément autour d'un axe de symétrie vertical (A) du corps de diffusion (4).

4. Lampe selon la revendication 3, le recouvrement supérieur (22) étant une boule opalescente et étant indirectement contraint à une structure de support (2) par butée sur le support inférieur (23) à son tour contraint, préférablement directement, à la structure de support (2),
le support inférieur (23) ayant une base sensiblement plate (23a) sur laquelle une pluralité d'ouvertures (5) sont définies, particulièrement elles sont disposées dans l'ordre autour d'un axe de symétrie du support inférieur (23), et le corps de diffusion (4) étant entièrement constitué d'un verre de diffusion opalin ou d'un matériau plastique opalin, tel que du polycarbonate ou du polyméthylméthacrylate,
particulièrement le support inférieur (23) étant constitué d'un matériau plastique opalescent.

5. Lampe selon l'une quelconque des revendications précédentes de 3 à 4, le recouvrement supérieur (22) définissant un volume interne uniquement accessible à travers les ouvertures de passage (5) du support inférieur (23) pour piéger sensiblement un insecte qui est entré à travers l'ouverture de passage.

6. Lampe selon l'une quelconque des revendications précédentes, le corps de diffusion (4) comprenant en outre au moins un joint (8) placé autour de chaque ouverture de passage (5) pour limiter une entrée possible d'eau et/ou le corps de diffusion (4) comprenant en outre au moins un bord, par exemple obtenu par moulage, placé autour de chaque ouverture de passage (5) pour limiter une entrée possible d'eau.

7. Lampe selon l'une quelconque des revendications précédentes, la source de lumière principale (3) ayant un ton de lumière froide ayant une température de couleur supérieure à 4 000 K, particulièrement supérieure à 6 000 K, par exemple égale à 6 500 K, la source de lumière principale (3) étant une source de lumière fluorescente et éventuellement étant l'unique source de lumière de la lampe.

8. Lampe selon l'une quelconque des revendications précédentes, la source de lumière principale (3) ayant une configuration définissant un siège de collecte interne (25) accessible depuis le dessus dans les conditions d'utilisation de la lampe, particulièrement la source de lumière principale (3) faisant preuve d'un motif en spirale ou en colonne et se développant autour d'un axe sensiblement vertical dans les conditions d'utilisation de la lampe, le siège interne (25) étant défini à l'intérieur de la spirale ou de la colonne.

9. Lampe selon l'une quelconque des revendications précédentes, comprenant en outre au moins une protection (24) localisée en-dessous de l'ouverture de passage (5) pour limiter une entrée possible d'eau depuis le bas, la protection (24) étant contrainte au support inférieur (23) et/ou à une structure de support (2) de la lampe, la protection (24) étant conçue pour permettre à l'eau d'être drainée, la protection (24) faisant preuve, par exemple, d'une surface supérieure plate ou convexe (24a), et/ou faisant preuve de trous de drainage.

10. Lampe selon l'une quelconque des revendications précédentes, comprenant en outre une structure de support (2) destinée à supporter au moins ledit corps de diffusion (4), la structure de support (2) étant destinée à être engagée avec, ou à venir en butée sur, le sol et/ou étant destinée à être engagée avec une paroi d'un bâtiment ou d'une structure et/ou étant destinée à être contrainte à un plafond ou une surface de recouvrement en particulier la structure de support (2) comprenant au moins un montant (2b) fixé au sol, par exemple pour être inséré dans le sol, à une première extrémité de celui-ci, et supportant un ou plusieurs corps de diffusion (4) à l'autre extrémité, la structure de support (2) comprenant au moins un élément de support (2c) fixé au sol à une première extrémité de celui-ci et supportant un ou plusieurs corps de diffusion (4) à l'autre extrémité, ledit élément de support (2) se développant le long d'un sens d'extension verticale dans les conditions d'utilisation de la lampe.

11. Lampe selon l'une quelconque des revendications précédentes, le moyen d'alimentation électrique (7) comprenant une alimentation principale et/ou un ou plusieurs panneaux solaires (9) et un stockage d'énergie (11), les panneaux solaires transférant l'énergie audit stockage et ledit stockage étant électriquement connecté audit élément électrifié (6) et/ou à ladite source de lumière principale (3), le panneau solaire (9) étant accouplé, particulièrement de manière amovible, au corps de diffusion (4) à une portion supérieure de celui-ci.

12. Lampe selon l'une quelconque des revendications précédentes, le moyen d'alimentation électrique (7) comprenant une structure de support (7a) supportant ledit élément électrifié (6) et ladite source de lumière principale (3), la structure de support (7a) étant accouplée de manière mobile au corps de diffusion (4) à une portion supérieure de celui-ci, particulièrement le corps de diffusion (4) faisant preuve d'un siège d'accès supérieur qui reçoit par accouplement par une insertion supérieure la structure de support (7a) du moyen d'alimentation électrique (7), ledit accouplement étant éventuellement d'un type par encliquetage, baïonnette ou fileté, la structure de support (7a) étant accouplée de manière mobile et étanche à l'eau au corps de diffusion (4) de sorte que l'eau de pluie ne peut pas s'écouler à travers le siège d'accès supérieur du corps de diffusion (2).

13. Lampe selon l'une quelconque des revendications précédentes, l'élément électrifié (6) comprenant au moins un fil électrique se développant autour de la source de lumière principale (3), et/ou au moins une grille métallique positionnée autour de la source de lumière principale (3), éventuellement les maillages de la grille étant d'une taille qui ne permet pas à un insecte tel qu'un moustique de passer à travers.

14. Lampe selon l'une quelconque des revendications précédentes, comprenant en outre un diffuseur interne de lumière (10) d'un matériau adapté pour guider et diffuser la lumière, par exemple un diffuseur de lumière opalin, ledit diffuseur interne de lumière (10) recevant directement la lumière depuis la source de lumière principale (3) et la diffusant à l'intérieur du corps de diffusion (4), le diffuseur interne de lumière (10) se développant le long d'un axe principal, par exemple l'un vertical dans les conditions d'utilisation de la lampe, l'élément électrifié (6) se développant autour dudit diffuseur interne de lumière (10), éventuellement le diffuseur interne de lumière (10) faisant preuve d'une forme cylindrique, par exemple ayant la forme d'un tube.

15. Lampe selon l'une quelconque des revendications précédentes, comprenant en outre un capteur de lumière solaire (12), ledit capteur activant une alimentation d'énergie pour la source de lumière principale (3) lorsque la lumière du soleil baisse en-dessous d'un seuil déterminé prédéfini et/ou comprenant en outre un minuteur programmable, ledit minuteur activant une alimentation d'énergie pour la source de lumière principale (3) en intervalles de temps déterminés.
